# EUROPEAN PATENT SPECIFICATION

(11) **EP 2 680 627 B1**
(45) Date of publication and mention of the grant of the patent: **20.12.2017**
(21) Application number: 12004786.5
(22) Date of filing: 26.06.2012
(51) Int. Cl.: H04W 8/18, H04W 12/08

(54) **Methods and devices for locking secure element to a mobile terminal**
Verfahren und Vorrichtungen zur Arretierung eines sicheren Elements an einem mobilen Gerät
Procédés et dispositifs de verrouillage d'élément sécurisé à un terminal mobile

(43) Date of publication of application: 01.01.2014
(73) Proprietor: Giesecke+Devrient Mobile Security GmbH, 81677 München (DE)
(72) Inventor: Hernandez, Pedro, 08820 Barcelona (ES)

(56) References cited:
- WO-A1-2010/115732
- GB-A- 2 445 778

## Description

### Field of the Invention

The invention relates to mobile communications in general and in particular to methods and devices for locking a secure element, such as a subscriber identity module (SIM) or a universal integrated circuit card (eUICC/UICC), to a mobile terminal.

### Background of the Invention

Communicating by means of a mobile terminal via a public land mobile network (PLMN) operated by a mobile network operator (MNO) generally requires the mobile terminal to be equipped with a secure element for securely storing subscription data that allows the mobile station, i.e. the mobile terminal including the secure element, to attach to the PLMM. For instance, in a mobile station configured to communicate according to the Global System for Mobile Communications (GSM), currently the world's most popular standard for mobile communications systems, the secure element for securely storing subscription data is called a subscriber identity module (SIM) and is usually provided in the form of a smart card that can be removably inserted into the mobile terminal. According to the GSM standard, the technical features of which are defined by a large number of interrelated and mutually dependent specifications published by the ETSI standardization organization, the SIM contains subscription data for authenticating and identifying the user of the mobile station, including in particular an International Mobile Subscriber Identity (IMSI) and an authentication key Ki.

One particular field of application of secure elements, such as a SIMs, UICCs or eUICCs, which is expected to grow rapidly within the next couple of years is M2M (machine-to-machine), i.e. the communication between machines over a mobile communications network without human intervention, also called the Internet of things. In M2M data is automatically transmitted between many different types of machines equipped with a secure element, such as TV systems, set top boxes, vending machines, motor vehicles, traffic lights, surveillance cameras, sensor devices, and the like. As in a lot of cases these machines are equipped with a removable secure element and at least from time to time will be unattended, the problem exists that the secure element of such a device can be easily removed and fraudulently used in another mobile terminal for accessing without permission the services provided by a mobile communications network.

It is known to address the above problem by locking secure element to a mobile terminal using the mobile terminal's International Mobile Equipment Identity (IMEI). According to this known solution the secure element will allow normal operation in case the mobile terminal can identify itself by the correct IMEI. This approach, however, suffers from the drawback that, in principle, it is possible to modify the IMEI of a mobile terminal thereby allowing a rogue mobile terminal by providing a fake IMEI to claim to be the mobile terminal that originally had been locked to a specific secure element.

Another method for locking a secure element to a mobile terminal is disclosed in WO 2010/115732. According to the method disclosed therein a data management server compares the terminal profile provided by a mobile terminal with a terminal profile that is stored within the data management server in association with the IMEI provided by the mobile terminal. In case the data management server determines that these terminal profiles differ, it can be concluded that the mobile terminal that provided the terminal profile is not the mobile terminal it claims to be and appropriate countermeasures can be taken, such as blocking further access to the mobile communications network.

GB 2 445 778 discloses a mobile communication device comprising a memory for storing a unique identifier of the device and a processor for determining the lock status of the device. If the processor determines that the device is unlocked, the device transmits to a server an authorization request to operate in the unlocked mode including the unique identifier of the device. The server compares the unique identifier to unique identifiers of devices stored in a database, each identifier associated with a lock status. The device receives from the server the lock status of the device and controls the operation of the device in dependence upon the determined lock status. Hence, unauthorized unlocking of a mobile communication device is prevented thereby prohibiting use of the mobile communication device with a new SIM or unauthorized network.

WO 2010/115732 discloses a method for identifying a mobile telephone, a device, where there is a ADD system (Automatic Device Detection) system connected to a network for mobile communication, the ADD system comprising a TCD (Terminal Capabilities Database) with SAT (SIM Application Toolkit) terminal profile values stored for all device models. The invention is characterized by the steps of retrieving the IMEI (International Mobile Equipment Identity) number from the device, retrieving the device model and the SAT terminal profile from the TCD by means of the retrieved IMEI, obtaining the SAT terminal profile of the actual device, comparing the SAT terminal profile of the actual device with the SAT terminal profile obtained from the TCD in the ADD system and considering the device as having the right IMEI number in case the SAT terminal profile of the actual device and the SAT terminal profile obtained from the TCD coincide.

The main object of the present invention is to provide for improved methods and devices for locking a secure element to a mobile terminal.

### Summary of the Invention

The above object is achieved according to the present invention by the subject matter of the independent claims. Preferred embodiments of the invention are defined in the dependent claims.

Generally, the present invention is based on the idea to use the order in which a mobile terminal, for instance, during the start-up sequence of the mobile terminal, accesses files stored on a secure element as a kind of fingerprint of the mobile terminal. Preferably, the fingerprint is derived from the file access profile of the mobile terminal by applying a hash function to the file access profile.

If the terminal fingerprint derived from the file access profile of the mobile terminal differs from a nominal terminal fingerprint, then it is concluded that the mobile terminal is not the mobile terminal the secure element has been locked to initially, so that further operation of the secure element should be blocked. Otherwise, i.e. if the terminal fingerprint derived from the file access profile of the mobile terminal is identical to the nominal terminal fingerprint, it is concluded that the mobile terminal is the mobile terminal the secure element has been locked to initially, so that operation of the secure element can continue.

The uniqueness of the terminal fingerprint generally increases with the number of files the file access profile is made up of. Thus, preferably, the file access profile is made up of all the necessary files stored on the secure element that need to be accessed by the mobile terminal in order to perform its intended functions, such as attaching to a mobile communications network. However, the present invention also covers embodiments, where the file access profile is made up only of a subset of all the necessary files stored on the secure element that need to be accessed by the mobile terminal in order to perform its intended functions.

More specifically, according to a first aspect the invention is directed to a method for locking a secure element to a mobile terminal, comprising the following steps: (a) determining an actual file access profile of the mobile terminal by determining which necessary files stored on the secure element are accessed by the mobile terminal and in which order these files are accessed by the mobile terminal in order to perform its intended functions; (b) whereby the actual file access profile of the mobile terminal defines an actual terminal fingerprint;(c) comparing the actual terminal fingerprint with a nominal terminal fingerprint stored on the secure element; and (d1) allowing further operation of the secure element in case the actual terminal fingerprint is identical with the nominal terminal fingerprint; or(d2) blocking further operation of the secure element in case the actual terminal fingerprint is not identical with the nominal terminal fingerprint. Preferably, the step of determining an actual file access profile of the mobile terminal is performed during a specific well-defined procedure of the mobile terminal, such as a start-up procedure, and/or in response to a specific event of the mobile terminal, such as a power-on or reset event.

According to preferred embodiments, the step of comparing the actual terminal fingerprint with a nominal terminal fingerprint is performed on the secure element, wherein the nominal terminal fingerprint is stored on the secure element. Preferably, the nominal terminal fingerprint stored on the secure element can be provided to the secure element during a personalization process thereof, over-the-air by a device management server or in response to a user interaction that causes the storing of the actual terminal fingerprint as the nominal terminal fingerprint.

Preferably, the step of determining an actual file access profile of the mobile terminal comprises the step of monitoring the APDU communication between the mobile terminal and the secure element.

According to preferred embodiments, the file access profile is created by providing a list of the names, file identifiers and/or any other file identification elements of the files that are accessed by the mobile terminal, wherein the elements of the list are ordered according to the order in which the files are accessed by the mobile terminal.

According to alternative preferred embodiments, the file access profile is created by concatenating the names, file identifiers and/or any other file identification elements of the files that are accessed by the mobile terminal, wherein the files are ordered according to the order in which the files are accessed by the mobile terminal.

Preferably, the step of deriving an actual terminal fingerprint from the actual file access profile of the mobile terminal comprises the step of applying a hash function to the actual file access profile of the mobile terminal.

According to preferred embodiments, the file access profile of the mobile terminal or the terminal fingerprint can be combined with further data elements characterizing the mobile terminal, such as the IMEI and/or the terminal profile of the mobile terminal.

According to preferred embodiments, the step of blocking further operation of the secure element in case the actual terminal fingerprint is not identical with the nominal terminal fingerprint comprises the additional steps of: transmitting an identification data element to a device management server in communication with the secure element to identify the secure element; and transmitting an updated nominal terminal fingerprint to the secure element, in case a firmware of the mobile terminal has been updated. Preferably, the identification data element transmitted to the device management server is the ICCID of the secure element.

According to a second aspect the invention is directed to a secure element that is configured to be locked to a mobile terminal, wherein the secure element comprises:a memory unit storing a plurality of files that can be accessed by the mobile terminal;means for determining an actual file access profile of the mobile terminal by determining which necessary files stored on the secure element are accessed by the mobile terminal and in which order these files are accessed by the mobile terminal in order to perform its intended functions;whereby the actual file access profile of the mobile terminal defines an actual terminal fingerprint;means for comparing the actual terminal fingerprint with a nominal terminal fingerprint stored on the secured element; and means for allowing further operation of the secure element, in case the actual terminal fingerprint is identical with the nominal terminal fingerprint, and for blocking further operation of the secure element, in case the actual terminal fingerprint is not identical with the nominal terminal fingerprint. Preferably, an application running on an CPU of the secure element provides for the determining means, the deriving means, the comparing means and/or the means for allowing further operation of the secure element, in case the actual terminal fingerprint is identical with the nominal terminal fingerprint, and for blocking further operation of the secure element, in case the actual terminal fingerprint is not identical with the nominal terminal fingerprint

According to preferred embodiments, the secure element is configured as a SIM, UICC, eUICC, USIM, R-UIM or ISIM.

According to a third aspect the invention provides a mobile communication system comprising the above described secure element and a mobile terminal that is locked to the secure element by means of the above described methods.

These and other features, characteristics, advantages, and objects of the invention will be clear from the following detailed description of preferred embodiments, given as a non-restrictive example, under reference to the attached drawings. The person skilled in the art will appreciate, in particular, that the above preferred embodiments can be combined in several ways, which will result in additional advantageous embodiments that are explicitly supported and covered by the present invention. In particular, the person skilled in the art will appreciate that the above described preferred embodiments can be implemented in the context of the different aspects of the invention described above.

### Brief description of the drawings

- Fig. 1: shows a schematic overview of a mobile communications system illustrating different aspects of the present invention;
- Fig. 2: shows a diagram illustrating several steps of a method for identifying a mobile terminal according to a preferred embodiment of the invention; and
- Fig. 3: shows a diagram illustrating several steps of a method for identifying a mobile terminal according to a further preferred embodiment of the invention.

### Detailed description of preferred embodiments

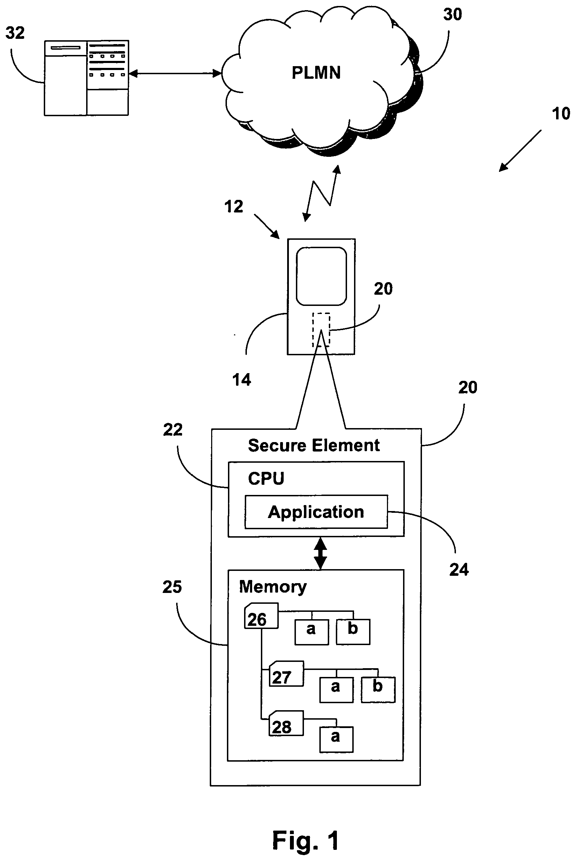

Figure 1 shows schematically the components of a mobile communications system 10 as well as some of the communication channels between the components of this system 10 that illustrates different aspects of the present invention.

An exemplary mobile station 12 is shown in figure 1 that consists of a mobile terminal 14 and a secure element 20 for securely storing and processing data that uniquely identifies the secure element 20. According to preferred embodiments of the invention the secure element 20 is configured as a subscriber identity module (SIM), as the SIM currently is the most popular type of secure element used in mobile communications systems for identification as well as for the provision of different special functions and value-added services. The person skilled in the art will appreciate, however, that other types of secure elements that, depending on the underlying generation and type of mobile communications system standard, are designated as UICC, eUICC, USIM, R-UIM, ISIM and the like, are also encompassed by the present invention. Moreover, the person skilled in the art will appreciate that the present invention can be advantageously put into practice by means of a secure element 20 that is removably inserted in the mobile terminal 14 or, alternatively, a secure element 20 that is fixedly embedded into the mobile terminal 14, as in the case of an embedded UICC (eUICC).

The mobile station 12 is configured to communicate via the air interface with a mobile communications network or Public Land Mobile Network (PLMN) 30, preferably operated by a Mobile Network Operator (MNO) according to the GSM standard. In the following, preferred embodiments of the invention will be described in the context of a mobile communications network according to the standards of the Global System for Mobile communication (GSM), as specified in a number of specifications provided by ETSI. However, the person skilled in the art will appreciate that the present invention may be advantageously applied in connection with other mobile communications systems as well. Such systems include third-generation mobile communications systems (3GPP), such as the Universal Mobile Telecommunications System (UMTS), and next generation or fourth-generation mobile networks (4G), such as Long Term Evolution (LTE), as well as other mobile communications systems, such as CDMA, GPRS (General Packet Radio Service), CAMEL (Customised Applications for Mobile network Enhanced Logic) and the like.

As is well known to the person skilled in the art, the PLMN 30 configured according to the GSM standard generally comprises a base station subsystem consisting of one or more base transceiver stations that define respective cells of the PLMN 30 and are connected to a base station controller. Generally, such a base station controller is one of several base station controllers that communicate with a mobile switching center (MSC). Often, a local database called Visitor Location Register (VLR) for keeping track of the mobile stations currently located within the cells covered by a MSC (i.e. the MSC service area) is incorporated in the MSC. The MSC provides essentially the same functionality as a central office switch in a public-switched telephone network and is additionally responsible for call processing, mobility management, and radio resource management. The MSC is further in communication with a home location register (HLR), which is the primary database of the PLMN 30 that stores information about its mobile users required for authentication. To this end, the HLR generally is in communication with an authentication center (AUC).

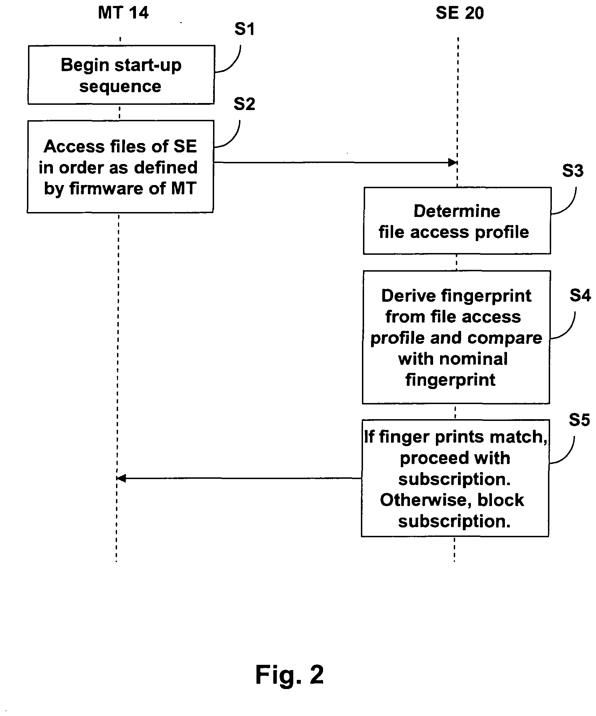

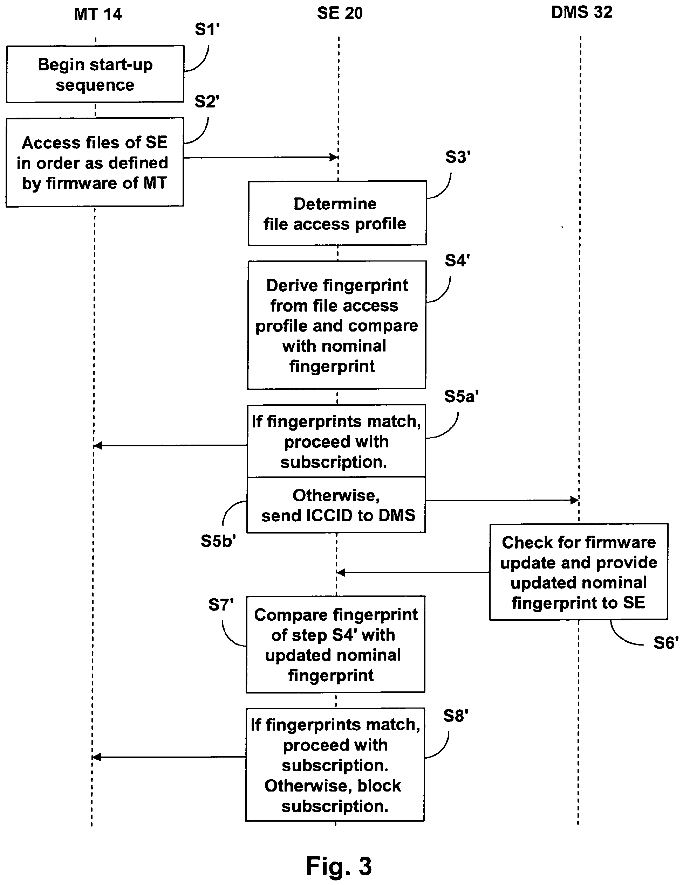

As can be taken from the enlarged schematic view of the secure element 20 in figure 1, the secure element 20 preferably comprises a central processing unit (CPU) 22 for monitoring and processing data being transferred into and out of the secure element 20. Preferably, an application 24 is running on the CPU 22 that is configured to identify the mobile terminal 14 and thereby lock the secure element 20 to the mobile terminal 14 according to the methods disclosed by the present invention and whose features will be described in the context of figures 2 and 3 in more detail further below. The application 24 could be implemented, for instance, as a Java Applet and/or as part of a USIM application.

The CPU 22 is in communication with a memory unit 25 for storing data on the secure element 20. At least part of the memory unit 25 is configured as a non-volatile memory, such as a ROM, EEPROM and/or Flash memory, which can store, for instance, the operating system of the secure element 20 as well as the program code of the application 24 for identifying the mobile terminal 14. However, at least a part of an operating system could be stored on an internal non-volatile memory of the CPU 22 as well. As is well known to the person skilled in the art, a volatile RAM for storing transient data could be part of the memory unit 25 or implemented as a separate unit on the secure element 20 as well.

The memory unit 25, moreover, preferably stores all those files that are necessary so that the secure element 20 in combination with the mobile terminal 14 can provide for the intended functionality of the mobile station 12, such as communicating with other entities connected to the PLMN 30. For instance, in order to be able to attach to the PLMN 30 the mobile terminal 14 has to obtain certain information stored within specific files on the memory unit 25 of the secure element 20, for instance, the IMSI stored thereon. In the preferred embodiment shown in figure 1, the exemplary files 26a, 26b, 27a, 27b and 28a constitute such files that have to be accessed by the mobile terminal 14, for instance, during its start-up sequence, which will be described in more detail in the context of figures 2 and 3.

Preferably, the memory unit 25 of the secure element 20 is configured to implement a file system architecture as defined in at least one of the following specifications, which are incorporated herein by reference: ISO/IEC 7816-4, ETSI TS 100 977 / 3GPP TS 11.11, ETSI 151 011 / 3GPP TS 51.011 and/or 3GPP TS 31.102 (formerly known as ETSI TS 102 221). According to these specifications the file system of a secure element is generally defined as a hierarchical structure comprising the following basic elements: a master file (MF), dedicated files (DFs) and elementary files (EFs). The MF is the root of the file hierarchy and generally there is only one MF on a secure element configured according to the above specifications. The MF may contain, as elements, a DF, or even many DFs, and it may contain zero to many EFs. A DF is essentially a container for EFs, i.e. a DF may contain zero to many EFs. An EF may contain only records, i.e. actual files. For the case of a secure element 20 implemented as a UICC or eUICC with a USIM application running thereon the above mentioned specification 3GPP TS 31.102 additionally defines an application dedicated file (ADF), which is a sort of combination of a MF and a DF and as such is arranged separate from and at the same level of the file hierarchy as the MF. More information about the standardized file system architectures of different secure elements, such as a SIM or a eUICC/UICC with a USIM application running thereon, can be obtained, for instance, from the textbook "Handbuch der Chipkarten", W. Rankl and W. Effing, 5. Edition, Carl Hanser Verlag, München, which is incorporated herein by reference.

In the preferred embodiment shown in figure 1, the exemplary file 26 could constitute a master file (MF) (or alternatively an ADF) and define the root of the file system implemented within the memory unit 25. In the exemplary embodiment shown in figure 1 the MF 26 contains the elementary files (EFs) 26a and 26b as well as the dedicated files (DFs) 27 and 28. In turn, the DF 27 contains the EFs 27a and 27b and the DF 28 contains the EF 28a. The person skilled in the art will appreciate that generally, in practice, many more files than the exemplary files 26a, 26b, 27a, 27b and 28a depicted in figure 1 are available on the memory unit 25 of the secure element 20.

As is well known to the person skilled in the art, the above mentioned specifications ETSI TS 100 977 / 3GPP TS 11.11, ETSI 151 011 / 3GPP TS 51.011 and/or 3GPP TS 31.102 define a set of generally mandatory files that have to be present on the memory unit of a secure element, such as the memory unit 25 of the secure element 20 shown in figure 1, in order to configure the mobile terminal 14 cooperating with the secure element 20 for an attachment to the PLMN 30. The EFs 26a, 26b, 27a, 27b and 28a stored in the memory unit 25 of the secure element 20 shown in figure 1 could be any of these generally mandatory files defined in these specifications, such as: EF_{ICCID} (i.e. the elementary file containing the ICCID of the secure element), EF_{FLPMN} (i.e. the elementary file defining forbidden public land mobile networks), EF_{IMSI} (i.e. the elementary file containing the IMSI assigned to the secure element), EF_{Kc} (i.e. the elementary file containing the GSM ciphering key for encrypting the data communication via the air interface), EF_{LOCI} (i.e. the elementary file containing information about the present location of the mobile terminal), EF_{PLMNsel} (i.e. the elementary file containing a list of preferred PLMNs) and the like. A complete compilation of these files can be found in the above mentioned specifications, which as already mentioned above are incorporated herein by reference.

Although the names of the set of mandatory files that must be present on the secure element 20 for the mobile station 12 to function properly, e.g. to be able to attach to the PLMN 30, could differ for a secure element 20 that is not configured as a SIM or UlCC/eUICC according to the above specifications, the person skilled in the art will appreciate that such secure elements 20 containing files with different file names according to different mobile communications standards are encompassed by the present invention as well.

In order for the mobile terminal 14 to be able to access, for instance, one of the files 26a, 26b, 27a, 27b, 28a stored in the memory unit 25 of the secure element 20 shown in figure 1, the mobile terminal 14 and the secure element 20 have to communicate by means of a suitable communication protocol. As is well known to the person skilled in the art, in case the secure element 20 is configured as a SIM or eUICC/UICC with a USIM application running thereon the exchange of data between the mobile terminal 14 and the secure element 20 is based on application protocol data units (APDUs). The structure of an APDU is defined in the above mentioned specification ISO/IEC 7816-4. Generally, the communication between the mobile terminal 14 and the secure element 20 is implemented according to a master slave model in that the mobile terminal 14 acts by issuing a command APDU (C-APDU) and the secure element 20 reacts by issuing a corresponding response APDU (R-APDU). A C-APDU issued by the mobile terminal 14 generally contains a command, such as "SELECT" for selecting a file and "READ BINARY" or "READ RECORD" for reading a file stored on the secure element 20.

Preferably, the mobile terminal 14 is implemented with a firmware that controls the operation of the mobile terminal 14 and defines its reactions to specific terminal events. For instance, when the mobile terminal 14 is powered on, the firmware operating the mobile terminal 14 generally will cause the mobile terminal 14 to perform a well-defined start-up sequence or procedure (also called initialization), whereafter the mobile terminal 14 will be configured, for instance, to attach to the PLMN 30. As part of this start-up sequence the mobile terminal 14 accesses files stored in the memory unit 25 of the secure element 20 in order to configure itself for an attachment to the PLMN 30. As already briefly described above, such an access of files stored on the secure element 20 by the mobile terminal 14 can be performed by selecting and reading the corresponding files using respective C-APDUs containing, for instance, the commands "SELECT", "READ BINARY" and/or "READ RECORD". For instance, the exemplary EF 27b shown in figure 1, which could be the EF_{IMSI}, can be accessed by selecting the EF 27b with a C-APDU containing the command "SELECT" and the file identifier (FID) of the EF 27b and a C-APDU containing the command "READ BINARY". Similar C-APDUs will be used for selecting and reading other files, such as the EFs 26a, 26b, 27a and 28a shown in figure 1, that might have to be accessed by the mobile terminal 14 during the start-up procedure. Thus, generally the firmware operating on the mobile terminal 14 defines a file access profile, i.e. the firmware defines which files stored in the memory unit 25 of the secure element 20 will be accessed and in what order these files will be accessed by the mobile terminal 14. The person skilled in the art will appreciate, however, that the present invention also covers embodiments, where the file access profile is not or not only defined by the firmware of the mobile terminal 14, but at least partly by the operating system and/or the hardware of the mobile terminal 14 and/or a SIM application running thereon.

In case the secure element 20 is implemented in the form of a UICC/eUICC with a USIM application running thereon the start-up sequence of the mobile terminal 14 with respect to the secure element 20 begins with the step of selecting the USIM application and ends with the step of receiving the first status command by the secure element 20. In between these steps, the start-up sequence consists of a multitude of steps of selecting and reading each of the files required by the mobile terminal 14 to configure itself for an attachment to the PLMN 30. For further details about the start-up sequence for a secure element implemented as an eUICC/UICC with a USIM application running thereon reference is made to the above mentioned specification 3GPP 31.102.

Under further reference to figure 2, a first preferred embodiment of a method for locking a secure element, for instance the secure element 20, to a mobile terminal, for instance the mobile terminal 14, by will now be described. In step S1 of figure 2 the mobile terminal 14 begins its start-up sequence, for instance, in response to a power-on or reset event of the mobile terminal 14. As already described above, this start-up sequence generally involves several steps of accessing mandatory files stored on the memory unit 25 of the secure element 20, which define a file access profile that is essentially determined by the configuration of the mobile terminal 14, such as by the firmware of the mobile terminal 14 (step S2 of figure 2). According to the present invention, preferably, the secure element 20 is configured to monitor and log these file accesses by the mobile terminal 14 thereby creating a file access profile of the mobile terminal 14 (step S3 of figure 2). Preferably, it is the application 24 running on the CPU 22 of the secure element 20 that is configured to monitor and log the file accesses by the mobile terminal 14. To this end, the application 24 could be configured to monitor and log the APDU communication between the mobile terminal 14 and the secure element 20 and, in particular, such APDUs that contain a command for selecting a file and/or a command for reading a file. Thus, for the preferred embodiment shown in figure 1 the file access profile monitored and logged preferably by the application 24 running on the CPU 22 of the secure element 20 could look as follows: "SELECT EF 27a" | "READ BINARY" | "SELECT EF 28a" | "READ BINARY" | "SELECT EF 26b" | "READ BINARY" | ..., where | denotes the concatenation operation. Alternatively, the file access profile could be created by simply concatenating the names, file identifiers or any other identification elements of the files in the order in which they are accessed, such as follows: "EF 27a" | "EF 28a" | "EF 26b" | ... According to a further alternative, the file access profile could be created by concatenating the actual content of the files in the order in which they are accessed, such as follows: content(EF 27a) | content(EF 28a) | content(EF 26b) | ... Instead of concatenating the above elements the file access profile could simply be a list of the names, file identifiers or any other suitable identification elements of the files accessed by the mobile terminal 14, wherein the elements of the list are ordered according to the order in which the files have been accessed by the mobile terminal 14.

The person skilled in the art will appreciate that the above described file access profiles of the mobile terminal 14 defines a sort of fingerprint of the mobile terminal 14. Obviously, the uniqueness of this fingerprint generally increases with the number of files the file access profile is made up of. Thus, preferably, the file access profile is made up of all the necessary files stored on the secure element 20 that need to be accessed by the mobile terminal 14 in order to perform its intended functions, such as attaching to the PLMN 30. However, the present invention also covers embodiments, where the file access profile is made up only of a subset of all the necessary files stored on the secure element 20 that need to be accessed by the mobile terminal 14 in order to perform its intended functions.

After the secure element 20 has determined the file access profile of the mobile terminal 14 in step S3 of figure 2, the secure element 20 preferably derives a fingerprint of the mobile terminal from this file access profile (step S4 of figure 2). Although the present invention also covers embodiments, where the file access profile determined by the secure element 20 is simply taken as the fingerprint of the mobile terminal 14, the step of deriving the fingerprint from the file access profile preferably includes the step of applying a hash function to the file access profile, i.e. fingerprint = H(file access profile), where H is a hash function. Thus, for the preferred embodiment shown in figure 1 the fingerprint of the mobile terminal 14 could be derived from its file access profile determined by the secure element 20 by means of the following formula: fingerprint = H ("SELECT EF 27a" | "READ BINARY" | "SELECT EF 28a" | "READ BINARY" | "SELECT EF 26b" | "READ BINARY" | ...), where again | denotes the concatenation operation.

In step S4 of figure 2 the fingerprint derived by the secure element 20 from the file access profile of the mobile terminal 14 is, moreover, compared with a nominal fingerprint. Preferably, the nominal fingerprint is stored in the memory unit 25 of the secure element 20. As the person skilled in the art will appreciate, using a hash value of the file access profile as the fingerprint of the mobile terminal 14 and comparing the same with the nominal fingerprint has the advantage that it is not possible to derive a nominal file access profile from the nominal fingerprint, because a hash function is not invertible. Moreover, the person skilled in the art will appreciate that the nominal fingerprint which the actual fingerprint of the mobile terminal 14 is compared with could have been provided to the secure element 20 by several means. For instance, the nominal fingerprint could have been stored on the secure element 20 during a personalization process thereof. Alternatively, the nominal fingerprint could be provided over the air (OTA) to the secure element 20 by a device management server 32 connected to the PLMN 30, as shown in figure 1. As a further alternative it is conceivable that the user of the mobile terminal 14, after having authenticated itself vis-à-vis the secure element 20, could choose to store the fingerprint derived from the actual file access profile as the new nominal fingerprint. Such a feature could be advantageous, in case a mobile user continues to use his secure element with a new mobile terminal.

If the result of the step of comparing the actual fingerprint of the mobile terminal 14 with the nominal fingerprint is that the two fingerprints are identical, then there is at least a high probability that the mobile terminal 14 is the one it is supposed to be, namely the mobile terminal the secure element 20 has been paired with originally. In this case the secure element 20 preferably continues to operate as normal, such as proceeding with an authentication or subscription procedure, i.e. an attachment to the PLMN 30 (step S5 of figure 2, first alternative). Otherwise, i.e. if the actual fingerprint of the mobile terminal 14 does not match the nominal fingerprint stored on the secure element 20, it can be concluded that the mobile terminal 14 is not the mobile terminal that has been used to create the nominal fingerprint, i.e. the mobile terminal the secure element 20 has been paired with originally. Unless the firmware of the mobile terminal the secure element 20 has been paired with originally has been modified, this strongly indicates that the mobile terminal 14 is not the one it is supposed to be, so that in this case the secure element 20 preferably blocks any further operation, for instance, an attachment to the PLMN 30 (step S5 of figure 2, second alternative).

As already partially mentioned above, it is preferably the application 24 running on the CPU 22 of the secure element 20 that controls and coordinates the steps described in the context of figure 2 that require an action of the secure element 20, namely steps S3 to S5 of figure 2.

A further preferred embodiment of the present invention that includes an interaction between the secure element 20 and a device management server 32 connected to the PLMN 30 shown in figure 1 to check whether any updates of the firmware of the mobile terminal 14 might be the cause for a mismatch between the actual fingerprint derived from the file access profile of the mobile terminal 14 and the nominal fingerprint stored on the secure element 20 will now be described under reference to figure 3. As steps S1' to S4' of the further preferred embodiment shown in figure 3 are identical to steps S1 to S4 of the preferred embodiment shown in figure 2, which have been described in detail above, only the steps of figure 3 following step S4' will be described in greater detail in the following.

Although step S5a' of figure 3 is identical to the first alternative of step S5 of figure 2, step S5b' of figure 3 differs from the second alternative of step S5 of figure 2 according to which any further operation is blocked by the secure element 20 in that the secure element 20 transmits an identification data element that uniquely identifies the secure element 20 to the device management server 32 that is connected to the PLMN 30, as shown in figure 1. Preferably, the identification data element transmitted from the secure element 20 to the device management server 32 is the integrated circuit card ID (ICCID). As is well known to the person skilled in the art, the ICCID is a unique serial number of the secure element 20 that is stored on the secure element 20 and can also be engraved or printed on the body thereof. The ICCID can be up to 20 digits long, including a single check digit. Generally, the ICCID is composed of the following subparts: issuer identification number (IIN), including major industry identifier (MII), country code and issuer identifier, individual account identification number, check digit.

Having received the ICCID of the secure element 20 in step S5b' of figure 3 the device management server 32 can uniquely identify the secure element 20 and can check whether the mobile terminal 14 has been provided with any firmware updates that could be the cause for a modified fingerprint of the mobile terminal 14. If this is the case, the device management server 32 transmits an updated nominal fingerprint to the secure element (step S6' of figure 3). Obviously, the device management server 32 has to derive this updated nominal fingerprint on the basis of an updated file access profile defined by the updated firmware in the same way as the secure element 20 derives the actual fingerprint from the file access profile of the mobile terminal 14 in step S4' of figure 3 by using, for instance, the same hash function to derive the terminal fingerprint.

As the person skilled in the art will appreciate, in case the device management server 32 does not find any firmware updates that have been provided to the mobile terminal 14 the device management server 32 will inform the secure element 20 accordingly, which, in turn, due to the mismatch between the actual and the nominal terminal fingerprints will block any further operation (not shown in figure 3).

Once the secure element 20 has received the updated nominal terminal fingerprint from the device management server 32 in step S6' of figure 3, it compares this updated nominal terminal fingerprint with the terminal fingerprint derived in step S4' of figure 3. If the result of the step of comparing the actual terminal fingerprint of the mobile terminal 14 with the updated nominal terminal fingerprint is that the two terminal fingerprints are identical, then there is at least a high probability that the mobile terminal 14 is the one it is supposed to be, namely the mobile terminal 14 the secure element 20 has been paired with originally. In this case the secure element 20 preferably continues to operate as normal, such as proceeding with a subscription/ attachment procedure (step S8' of figure 3, first alternative). Otherwise, i.e. if the actual terminal fingerprint of the mobile terminal 14 does not match the updated nominal terminal fingerprint that has been provided by the device management server 32 in step S6' of figure 3, it can be concluded that the mobile terminal 14 is not the mobile terminal the secure element 20 has been paired with originally. In this case the secure element 20 preferably blocks any further operation, for instance, an attachment to the PLMN 30 (step S8' of figure 3, second alternative).

In a further preferred embodiment step S7' of figure 3, i.e. comparing the actual fingerprint of the mobile terminal 14 with an updated nominal terminal fingerprint, could be performed on the device management server 32. In that case the actual terminal fingerprint derived by the secure element 20 in step S4' of figure 3 could be transmitted to the device management server 32 along with the ICCID in step S5b' of figure 3.

In the above described preferred embodiments the fingerprint of the mobile terminal 14 is derived from its file access profile, preferably by using the file access profile as an input for a hash function and the output of the hash function as the terminal fingerprint. According to further preferred embodiments of the present invention, it is possible to combine the file access profile or the fingerprint of the mobile terminal 14 with other data elements that characterize the mobile terminal 14. For instance, the file access profile or the fingerprint of the mobile terminal 14 could be combined with the International Mobile Equipment Identity (IMEI) as specified in the specification 3GPP TS 23.003 or at least parts of the IMEI, such as the model number part and/or the serial number part of the IMEI. Additionally or alternatively, the file access profile or fingerprint of the mobile terminal 14 can be combined with its terminal profile. As is known to the person skilled in the art, the terminal profile generally is provided to a secure element when the secure element is being initialized and defines the operations which the mobile terminal is capable of executing or authorized to execute. Using the terminal profile as a guide, the secure element can avoid sending the mobile terminal instructions which it is unable or unauthorized to execute.

The present invention has been described in the context of some advantageous embodiments implemented in the context of a GSM network. However, this is not to be understood to restrict the invention to the details of these embodiments, which are presented for illustrative purposes only, as the general idea of the present invention could equally be implemented in the context of mobile communications systems other than GSM. The person skilled in the art will appreciate that that present invention can be applied to any type of mobile station configured to communicate via a mobile communications network. Moreover, in light of the above detailed description the person skilled in the art will appreciate that modifications and/or additions can be made to the methods and devices as described heretofore, which are to be considered to remain within the scope of the present invention as defined by the appended claims.

## Claims

1. Method for locking a secure element (20) to a mobile terminal (14), comprising the following steps:
(a) determining an actual file access profile of the mobile terminal (14) by determining which necessary files stored on the secure element (20) are accessed by the mobile terminal (14) and in which order these files are accessed by the mobile terminal (14) in order to perform its intended functions;
(b) whereby the actual file access profile of the mobile terminal (14) defines an actual terminal fingerprint;
(c) comparing the actual terminal fingerprint with a nominal terminal fingerprint stored on the secure element (20); and
(d1) allowing further operation of the secure element (20) in case the actual terminal fingerprint is identical with the nominal terminal fingerprint; or
(d2) blocking further operation of the secure element (20) in case the actual terminal fingerprint is not identical with the nominal terminal fingerprint.

2. The method of claim 1, wherein the step of determining an actual file access profile of the mobile terminal (14) is performed during a specific procedure, such as a start-up procedure, and/or in response to a specific event, such as a power-on or reset event, of the mobile terminal (14).

3. The method of claim 1, wherein the step of comparing the actual terminal fingerprint with a nominal terminal fingerprint is performed on the secure element.

4. The method of claim 3, wherein the nominal terminal fingerprint stored on the secure element (20) has been provided to the secure element (20) during a personalization process thereof, over-the-air by a device management server (32) or in response to a user interaction that causes the storing of the actual terminal fingerprint as the nominal terminal fingerprint.

5. The method of claim 1, wherein the step of determining an actual file access profile of the mobile terminal (14) comprises the step of monitoring the APDU communication between the mobile terminal (14) and the secure element (20).

6. The method of claim 1, wherein the file access profile is created by providing a list of the names, file identifiers or any other identification elements of the files accessed by the mobile terminal (14), wherein the elements of the list are ordered according to the order in which the files are accessed by the mobile terminal (14).

7. The method of claim 1, wherein the file access profile is created by concatenating the names, file identifiers or any other identification elements of the files that are accessed by the mobile terminal (14), wherein the files are ordered according to the order in which the files are accessed by the mobile terminal (14).

8. The method of claim 1, wherein the step of deriving an actual terminal fingerprint from the actual file access profile of the mobile terminal (14) comprises the step of applying a hash function to the actual file access profile of the mobile terminal (14).

9. The method of claim 1, wherein the file access profile of the mobile terminal (14) or the terminal fingerprint are combined with further data elements characterizing the mobile terminal (14), such as the IMEI and/or the terminal profile of the mobile terminal (14).

10. The method of claim 1, wherein the step of blocking further operation of the secure element (20) in case the actual terminal fingerprint is not identical with the nominal terminal fingerprint comprises the additional steps of:
transmitting an identification data element to a device management server (32) in communication with the secure element (20) to identify the secure element (20); and
transmitting an updated nominal terminal fingerprint to the secure element (20), in case a firmware of the mobile terminal (14) has been updated.

11. The method of claim 10, wherein the identification data element transmitted to the device management server (32) is the ICCID of the secure element (20).

12. Secure element (20) that is configured to be locked to a mobile terminal (14), wherein the secure element (20) comprises:
a memory unit (25) storing a plurality of files that can be accessed by the mobile terminal (14);
means for determining an actual file access profile of the mobile terminal (14) by determining which necessary files stored on the secure element (20) are accessed by the mobile terminal (14) and in which order these files are accessed by the mobile terminal (14) in order to perform its intended functions;
whereby the actual file access profile of the mobile terminal (14) defines an actual terminal fingerprint;
means for comparing the actual terminal fingerprint with a nominal terminal fingerprint stored on the secured element (20); and
means for allowing further operation of the secure element (20), in case the actual terminal fingerprint is identical with the nominal terminal fingerprint, and for blocking further operation of the secure element (20), in case the actual terminal fingerprint is not identical with the nominal terminal fingerprint.

13. The secure element (20) of claim 12, wherein an application (24) running on an CPU (22) of the secure element (20) provides for the determining means, the deriving means, the comparing means and/or the means for allowing further operation of the secure element (20), in case the actual terminal fingerprint is identical with the nominal terminal fingerprint, and for blocking further operation of the secure element (20), in case the actual terminal fingerprint is not identical with the nominal terminal fingerprint

14. The secure element (20) of claim 12, wherein the secure element (20) is configured as a SIM, UICC, eUICC, USIM, R-UIM or ISIM.

15. Mobile communication system (10) comprising the secure element (20) according to any one of claims 12 to 14 and a mobile terminal (14) that is locked to the secure element (20) by means of the method according to any one of claims 1 to 11.

## Patentansprüche

1. Verfahren zum Verriegeln eines Sicherheitselements (20) mit einem mobilen Endgerät (14), umfassend die folgenden Schritte:
(a) Ermitteln eines aktuellen Dateizugriffsprofils des mobilen Endgeräts (14) durch Ermitteln, auf welche notwendigen Dateien, die auf dem Sicherheitselement (20) gespeichert sind, von dem mobilen Endgerät (14) zugegriffen wird, und in welcher Reihenfolge auf diese Dateien von dem mobilen Endgerät (14) zugegriffen wird, um dessen beabsichtigte Funktionen auszuführen;
(b) wobei das aktuelle Dateizugriffsprofil des mobilen Endgeräts (14) einen aktuellen Endgerätefingerabdruck definiert;
(c) Vergleichen des aktuellen Endgerätefingerabdrucks mit einem nominalen Endgerätefingerabdruck, der auf dem Sicherheitselement (20) gespeichert ist; und
(d1) Gestatten eines weiteren Betriebs des Sicherheitselements (20) in dem Fall, dass der aktuelle Endgerätefingerabdruck identisch mit dem nominalen Endgerätefingerabdruck ist; oder
(d2) Blockieren eines weiteren Betriebs des Sicherheitselements (20) in dem Fall, dass der aktuelle Endgerätefingerabdruck nicht identisch mit dem nominalen Endgerätefingerabdruck ist.

2. Verfahren nach Anspruch 1, wobei der Schritt des Ermitteins eines aktuellen Dateizugriffsprofils des mobilen Endgeräts (14) während einer spezifischen Prozedur, wie zum Beispiel einer Start-Up-Prozedur, und / oder in Beantwortung eines spezifischen Ereignisses des mobilen Endgeräts (14) durchgeführt wird, wie zum Beispiel eines Power-On- oder Reset-Ereignisses.

3. Verfahren nach Anspruch 1, wobei der Schritt des Vergleichens des aktuellen Endgerätefingerabdrucks mit einem nominalen Endgerätefingerabdruck auf dem Sicherheitselement durchgeführt wird.

4. Verfahren nach Anspruch 3, wobei der auf dem Sicherheitselement (20) gespeicherte nominale Endgerätefingerabdruck dem Sicherheitselement (20) während dessen Personalisierungsprozess entweder Over-The-Air durch einen Geräteverwaltungsserver (32) oder in Beantwortung einer Benutzerinteraktion bereitgestellt wurde, die das Speichern des aktuellen Endgerätefingerabdrucks als nominaler Endgerätefingerabdruck bewirkt.

5. Verfahren nach Anspruch 1, wobei der Schritt des Ermitteins eines aktuellen Dateizugriffsprofils des mobilen Endgeräts (14) den Schritt des Überwachens derAPDU-Kommunikation zwischen dem mobilen Endgerät (14) und dem Sicherheitselement (20) umfasst.

6. Verfahren nach Anspruch 1, wobei das Dateizugriffsprofil durch Bereitstellen einer Liste der Namen, Dateiidentifikatoren oder beliebiger anderer Identifikationselemente der Dateien erzeugt wird, auf die von dem mobilen Endgerät (14) zugegriffen wird, wobei die Elemente der Liste gemäß der Ordnung geordnet sind, in welcher von dem mobilen Endgerät (14) auf die Dateien zugegriffen wird.

7. Verfahren nach Anspruch 1, wobei das Dateizugriffsprofil durch Konkatenieren der Namen, Dateiidentifikatoren oder beliebiger anderer Identifikationselemente der Dateien erzeugt wird, auf die von dem mobilen Endgerät (14) zugegriffen wird, wobei die Dateien gemäß der Ordnung geordnet sind, in welcher von dem mobilen Endgerät (14) auf die Dateien zugegriffen wird.

8. Verfahren nach Anspruch 1, wobei der Schritt des Ableitens eines aktuellen Endgeräteingerabdrucks aus dem aktuellen Dateizugriffsprofil des mobilen Endgeräts (14) den Schritt des Anwendens einer Hash-Funktion auf das aktuelle Dateizugriffsprofil des mobilen Endgeräts (14) umfasst.

9. Verfahren nach Anspruch 1, wobei das Dateizugriffsprofil des mobilen Endgeräts (14) oder der Endgerätefingerabdruck mit weiteren Datenelementen kombiniert werden, die das mobile Endgerät (14) charakterisieren, wie zum Beispiel die IMEI und / oder das Endgeräteprofil des mobilen Endgeräts (14).

10. Verfahren nach Anspruch 1, wobei der Schritt des Blockierens eines weiteren Betriebs des Sicherheitselements (14) in dem Fall, dass der aktuelle Endgerätefingerabdruck nicht identisch mit dem nominalen Endgerätefingerabdruck ist, die zusätzlichen Schritte umfasst:
Übertragen eines Identifikationsdatenelements an einen Geräteverwaltungsserver (32) in Kommunikation mit dem Sicherheitselement (20), um das Sicherheitselemente (20) zu identifizieren;
Übertragen eines aktualisierten nominalen Endgerätefingerabdrucks an das Sicherheitselement (20), für den Fall, dass eine Firmware des mobilen Endgeräts (14) aktualisiert wurde.

11. Verfahren nach Anspruch 10, wobei das Identifikationsdatenelements, welches an den Geräteverwaltungsserver (32) übertragen wird, die ICCID des Sicherheitselements (20) ist.

12. Sicherheitselement (20), welches eingerichtet ist, mit einem mobilen Endgerät (14) verriegelt zu werden, wobei das Sicherheitselement (20) umfasst:
eine Speichereinheit (25), die eine Vielzahl von Dateien speichert, auf die von dem mobilen Endgerät (14) zugegriffen werden kann;
Mittel zum Ermitteln eines aktuellen Dateizugriffsprofils des mobilen Endgeräts (14) durch Ermitteln, auf weiche notwendigen Dateien, die auf dem Sicherheitselement (20) gespeichert sind, von dem mobilen Endgerät (14) zugegriffen wird, und in welcher Reihenfolge auf diese Dateien von dem mobilen Endgerät (14) zugegriffen wird, um dessen beabsichtigte Funktionen auszuführen;
wobei das aktuelle Dateizugriffsprofil des mobilen Endgeräts (14) einen aktuellen Endgerätefingerabdruck definiert;
Mittel zum Vergleichen des aktuellen Endgerätefingerabdrucks mit einem nominalen Endgerätefingerabdruck, der auf dem Sicherheitselement (20) gespeichert ist; und
Mittel zum Gestatten eines weiteren Betriebs des Sicherheitselements (20), für den Fall, dass der aktuelle Endgerät-Fingerabdruck identisch ist mit dem nominalen Endgerät-Fingerabdruck, und zum Blockieren eines weiteren Betriebs des Sicherheitselements (20) für den Fall, dass der aktuelle Endgerät-Fingerabdruck nicht identisch mit dem aktuellen Endgerät-Fingerabdruck ist.
Mittel zum Gestatten eines weiteren Betriebs des Sicherheitselements (20) in dem Fall, dass der aktuelle Endgerätefingerabdruck identisch mit dem nominalen Endgerätefingerabdruck ist, und zum Blockieren eines weiteren Betriebs des Sicherheitselements (20) in dem Fall, dass der aktuelle Endgerätefingerabdruck nicht identisch mit dem nominalen Endgerätefingerabdruck ist.

13. Sicherheitselement (20) nach Anspruch 12, wobei eine Applikation (24), die auf eine CPU (22) des Sicherheitselements (20) läuft, die Ermittlungsmittel, die Ableitungsmittel, die Vergleichsmittel und/oder die Mittel zum Gestatten eines weiteren Betriebs des Sicherheitselements (20) in dem Fall, dass der aktuelle Endgerätefingerabdruck identisch mit dem nominalen Endgerätefingerabdruck ist, und Blockieren eines weiteren Betriebs des Sicherheitselements (20) in dem Fall, dass der aktuelle Endgerätefingerabdruck nicht identisch mit dem nominalen Endgerätefingerabdruck ist, bereitstellt.

14. Sicherheitselement (20) nach Anspruch 12, wobei das Sicherheitselement (20) als eine SIM, UICC, eUICC, USIM, R-UIM oder ISIM ausgestaltet ist.

15. Mobiles Kommunikationssystem (10) umfassend das Sicherheitselement (20) nach einem der Ansprüche 12 bis 14 und eine mobiles Endgerät (14), das mittels des Verfahrens gemäß einem der Ansprüche 1 bis 11 mit dem Sicherheitselement (20) verriegelt ist.

## Revendications

1. Procédé de verrouillage d'un élément sécurisé (20) à un terminal mobile (14), comprenant les étapes suivantes :
(a) déterminer un profil d'accès de fichier réel du terminal mobile (14) en déterminant à quels fichiers nécessaires stockés sur l'élément sécurisé (20) accède le terminal mobile (14) et dans quel ordre le terminal mobile (14) accède à ces fichiers afin d'exécuter ses fonctions prévues ;
(b) de sorte que le profil d'accès de fichier réel du terminal mobile (14) définit une empreinte digitale de terminal réelle ;
(c) comparer l'empreinte digitale de terminal réelle avec une empreinte digitale nominale stockée sur l'élément sécurisé (20), et
(d1) permettre un fonctionnement supplémentaire de l'élément sécurisé (20) dans le cas où l'empreinte digitale de terminal réelle est identique à l'empreinte digitale nominale ; ou
(d2) bloquer tout fonctionnement supplémentaire de l'élément sécurisé (20) dans le cas où l'empreinte digitale de terminal réelle n'est pas identique à l'empreinte digitale nominale.

2. Procédé selon la revendication 1, dans lequel l'étape pour déterminer un profil d'accès de fichier réel du terminal mobile (14) est exécutée durant une procédure spécifique, telle qu'une procédure de démarrage et/ou en réaction à un événement spécifique, tel qu'un événement de mise sous tension ou de réinitialisation, du terminal mobile (14).

3. Procédé selon la revendication 1, dans lequel l'étape pour comparer l'empreinte digitale de terminal réelle avec une empreinte digitale nominale est exécutée sur l'élément sécurisé.

4. Procédé selon la revendication 3, dans lequel l'empreinte digitale de terminal nominale stockée sur l'élément sécurisé (20) a été fournie à l'élément sécurisé (20) durant un processus de personnalisation de celui-ci, par liaison radio par un serveur de gestion de dispositif (32) ou en réaction à une interaction d'utilisateur qui provoque le stockage de l'empreinte digitale de terminal réelle comme l'empreinte digitale nominale.

5. Procédé selon la revendication 1, dans lequel l'étape pour déterminer un profil d'accès de fichier réel du terminal mobile (14) comprend l'étape de surveillance de la communication APDU entre le terminal mobile (14) et l'élément sécurisé (20).

6. Procédé selon la revendication 1, dans lequel le profil d'accès de fichier est créé en fournissant une liste des noms, d'identifiants de fichier ou tout autre élément d'identification des fichiers auxquels accède le terminal mobile (14), dans lequel les éléments de la liste sont classés dans l'ordre dans lequel le terminal mobile (14) accède aux fichiers.

7. Procédé selon la revendication 1, dans lequel le profil d'accès de fichier est créé en concaténant les noms, identifiants de fichier ou tout autre élément d'identification des fichiers auxquels accède le terminal mobile (14), dans lequel les fichiers sont classés dans l'ordre dans lequel le terminal mobile (14) accède aux fichiers.

8. Procédé selon la revendication 1, dans lequel l'étape pour dériver une empreinte digitale de terminal réelle à partir du profil d'accès de fichier réel du terminal mobile (14) comprend l'étape pour appliquer une fonction de hachage au profil d'accès de fichier réel du terminal mobile (14).

9. Procédé selon la revendication 1, dans le profil d'accès de fichier réel du terminal mobile (14) ou l'empreinte digitale de terminal sont combinés avec d'autres éléments de données caractérisant le terminal mobile (14), tels que l'IMEI, et/ou le profil de terminal du terminal mobile (14).

10. Procédé selon la revendication 1, dans lequel l'étape pour bloquer tout fonctionnement supplémentaire de l'élément sécurisé (20) dans le cas où l'empreinte digitale de terminal réelle n'est pas identique à l'empreinte digitale nominale comprend les étapes supplémentaires suivantes :
transmettre un élément de données d'identification à un serveur de gestion de dispositif (32) en communication avec l'élément de sécurisation (20) afin d'identifier l'élément sécurisé (20), et
transmettre une empreinte terminale nominale à l'élément sécurisé (20), dans le cas où un micro logiciel du terminal mobile (14) a été mis à jour.

11. Procédé selon la revendication 10, dans lequel l'élément de données d'identification transmis au serveur de gestion de dispositif (32) est l'ICCID de l'élément sécurisé (20).

12. Élément sécurisé (20) configuré pour être verrouillé à un terminal mobile (14), dans lequel l'élément sécurisé (20) comprend :
une unité de mémoire (25) stockant une pluralité de fichiers auxquels le terminal mobile (14) peut accéder ;
un moyen pour déterminer un profil d'accès de fichier réel du terminal mobile (14) en déterminant à quels fichiers nécessaires stockés sur l'élément sécurisé (20) accède le terminal mobile (14) et dans quel ordre le terminal mobile (14) accède à ces fichiers afin d'exécuter ses fonctions prévues ;
en sachant que le profil d'accès de fichier réel du terminal mobile (14) définit une empreinte digitale de terminal réelle ;
un moyen pour comparer l'empreinte digitale de terminal réelle avec une empreinte digitale nominale stockée sur l'élément sécurisé (20), et
un moyen pour permettre un fonctionnement supplémentaire de l'élément sécurisé (20) dans le cas où l'empreinte digitale de terminal réelle est identique à l'empreinte digitale nominale, et
un moyen pour bloquer tout fonctionnement supplémentaire de l'élément sécurisé (20) dans le cas où l'empreinte digitale de terminal réelle n'est pas identique à l'empreinte digitale nominale.

13. Élément sécurisé (20) selon la revendication 12, dans lequel une application (24) fonctionnant sur une unité centrale (CPU, 22) de l'élément sécurisé (20) fournit le moyen de détermination, le moyen de dérivation, le moyen de comparaison, et/ou le moyen permettant un fonctionnement supplémentaire de l'élément sécurisé (20), dans le cas où l'empreinte digitale de terminal réelle est identique à l'empreinte digitale nominale, et le moyen pour bloquer tout fonctionnement supplémentaire de l'élément sécurisé (20), dans le cas où l'empreinte digitale de terminal réelle n'est pas identique à l'empreinte digitale nominale.

14. Élément sécurisé (20) selon la revendication 12, dans lequel l'élément sécurisé (20) est configuré comme un SIM, UICC, eUICC, USIM, R-UIM ou ISIM.

15. Système de télécommunications mobiles (10) comprenant l'élément sécurisé (20) selon l'une quelconque des revendications 12 à 14 et un terminal mobile (14) verrouillé sur l'élément sécurisé (20) au moyen du procédé selon l'une quelconque des revendications 1 à 11.
